# EUROPEAN PATENT APPLICATION

(11) **EP 4 769 930 A1**
(43) Date of publication of application: **01.07.2026**
(21) Application number: 25221344.2
(22) Date of filing: 08.12.2025
(51) Int. Cl.: H02M 7/493, H02M 7/5395

(54) **POWER CONVERSION APPARATUS AND CONTROL METHOD THEREOF**

(30) Priority: 30.12.2024 KR 20240199786
(71) Applicant: Hanwha Solutions Corporation, Jung-gu Seoul 04541 (KR)
(72) Inventor: JO, Seung Won, 04541 Seoul (KR); KIM, Jun Mo, 04541 Seoul (KR); SIM, Ju Young, 04541 Seoul (KR); KANG, Eun Seok, 04541 Seoul (KR)
(74) Representative: Mooser, Sebastian Thomas

(57) **Abstract**

Provided is a power conversion device including an input circuit configured to generate an input voltage, a first full-bridge inverter and a second full-bridge inverter each connected to the input circuit, at least one first inductor connected to the first full-bridge inverter, at least one second inductor connected to the second full-bridge inverter, an output circuit connected to the at least one first inductor and the at least one second inductor to generate an alternating current (AC) output voltage, and at least one processor configured to apply a first carrier signal and a control signal to the first full-bridge inverter, and apply a second carrier signal and the control signal to the second full-bridge inverter, wherein the first full-bridge inverter operates based on the first carrier signal and the control signal, and the second full-bridge inverter operates based on the second carrier signal and the control signal.

## Description

### BACKGROUND

### 1. Field

One or more embodiments relate to a power conversion device and a control method thereof. More particularly, one or more embodiments relate to a power conversion device including a bipolar inverter having an interleaved structure, and a control method thereof.

### 2. Description of the Related Art

As the use of renewable energy sources, such as solar power generation, expands, there is a growing need to improve the performance of grid-connected inverters built into energy storage systems (ESS) that support such expansion. To supply a 120V alternating current (AC) voltage used in the United States and Japan, a method of connecting an autotransformer to a single-phase, three-wire configuration is widely adopted. However, when using an autotransformer, there are disadvantages, such as increased volume and increased cost, and therefore, a technological alternative is required to compensate for this.

To solve these problems, a phase split technique has been proposed, which is attracting attention as a way to replace the autotransformer while enabling efficient voltage supply. However, there are still technical problems to be solved in grid-connected inverter configurations involving the split phase technique. Bipolar inverters, which are mainly used in single-phase grid-connected configurations, have the advantages of requiring fewer switches for power conversion and being easy to control, but have the disadvantages, such as high total harmonic distortion (THD), large sizes of inductors for power transmission, and heat generation due to high switch losses.

Therefore, to maximize the performance of ESS using renewable energy, a new technological approach is needed to overcome the limitations of the existing autotransformer-based configuration and bipolar inverter.

The aforementioned background technology is technical information possessed by the inventor for derivation of the disclosure or acquired by the inventor during the derivation of the disclosure, and is not necessarily prior art disclosed to the public before the application of the disclosure.

### SUMMARY

One or more embodiments provide a power conversion device and a control method thereof. The problems to be solved by the disclosure are not limited to the problems mentioned above, and other problems and advantages of the disclosure that are not mentioned will be understood by the following description and will be more clearly understood by the embodiments of the disclosure. Further, it will be readily understood that the objects and advantages of the disclosure may be realized by the means set forth in the appended claims and combinations thereof.

According to one or more embodiments, a power conversion device includes an input circuit configured to generate an input voltage, a first full-bridge inverter and a second full-bridge inverter each connected to the input circuit, at least one first inductor connected to the first full-bridge inverter, at least one second inductor connected to the second full-bridge inverter, an output circuit connected to the at least one first inductor and the at least one second inductor to generate an alternating current (AC) output voltage, and at least one processor configured to apply a first carrier signal and a control signal to the first full-bridge inverter, and apply a second carrier signal and the control signal to the second full-bridge inverter, wherein the first full-bridge inverter operates based on the first carrier signal and the control signal, and the second full-bridge inverter operates based on the second carrier signal and the control signal.

According to one or more embodiments, a method of controlling a power conversion device includes applying a first carrier signal and a control signal to a first full-bridge inverter, applying a second carrier signal and the control signal to a second full-bridge inverter, and obtaining an alternating current (AC) output voltage corresponding to an input voltage as the first full-bridge inverter and the second full-bridge inverter operate, wherein the first full-bridge inverter and the second full-bridge inverter are connected to an input circuit which generates the input voltage, and an output circuit generating the AC output voltage is connected to at least one first inductor and at least one second inductor.

According to one or more embodiments, provided is a computer-readable recording medium recorded thereon a program for causing a computer to execute the method.

Other aspects, features, and advantages in addition to those described above will become apparent from the following drawings, claims, and detailed description of the disclosure.

### BRIEF DESCRIPTION OF THE DRAWINGS

The following drawings attached to this specification illustrate preferred embodiments of the disclosure and, together with the detailed description of the disclosure described below, serve to further understand the technical idea of the disclosure; therefore, the disclosure should not be interpreted as being limited to matters described in such drawings:
FIG. 1 is a schematic view of a power supply system;
FIG. 2 is a schematic view of a power supply system according to an embodiment;
FIG. 3 is a schematic view of a power supply system according to another embodiment;
FIG. 4 is a block diagram of an apparatus according to an embodiment;
FIG. 5 is a schematic view of an example of a circuit of a first full-bridge inverter constituting a power conversion device according to an embodiment;
FIG. 6 is a schematic view of a circuit of an example of an interleaved bipolar inverter constituting a power conversion device according to an embodiment;
FIG. 7 is a schematic view of an example of an interleaved bipolar inverter employing a one-leg technique according to an embodiment;
FIG. 8 is a schematic view of a method of operating each switch included in a power conversion device according to an embodiment;
FIG. 9 is a schematic view of an example of a grid current waveform of a power conversion device according to an embodiment; and
FIG. 10 is a flowchart of a method of operating a power conversion device according to an embodiment.

### DETAILED DESCRIPTION

Effects and features of the disclosure and methods of achieving the same will be apparent with reference to embodiments and drawings described below in detail. However, the disclosure is not limited to the embodiments described below, but may be implemented in various different forms, and should be understood to include all changes, equivalents, or substitutes included in the idea and technical scope of the disclosure. The embodiments described below are provided so that this disclosure will be complete and will fully convey the scope of the invention to those skilled in the art to which the disclosure pertains. In describing the present disclosure, a detailed description of known related arts will be omitted when it is determined that the gist of the present disclosure may be unnecessarily obscured.

The terminology used in this application is used only to describe particular embodiments and is not intended to limit the disclosure. The singular forms as used herein are intended to include the plural forms as well unless the context clearly indicates otherwise. Terms, such as "include" or "have," are used herein and should be understood that they are intended to indicate an existence of several features, numbers, operations, operations, components, parts, or combinations thereof, and should also be understood that greater or fewer features, numbers, operations, operations, components, parts, or combinations thereof may likewise be utilized.

Some embodiments of the disclosure may be represented by functional block configurations and various processing operations. Some or all of these functional blocks may be implemented with any number of hardware and/or software configurations that perform specific functions. For example, the functional blocks of the disclosure may be implemented by at least one microprocessor or by circuit configurations for a given function. For example, the functional blocks of the disclosure may be implemented in various programming or scripting languages. Functional blocks may be implemented as algorithms which run on at least one processor. The disclosure may employ related art techniques for electronic environment setting, signal processing, and/or data processing. Terms, such as "mechanism," "element," "means," and "composition" may be used broadly and are not limited to mechanical and physical configurations.

Connection lines or connection members between components depicted in the drawings are only illustrative of functional connections and/or physical or circuit connections. In an actual device, connections between components may be represented by a variety of alternative or additional functional, physical, or circuit connections.

Hereinafter, the disclosure will be described in detail with reference to the accompanying drawings.

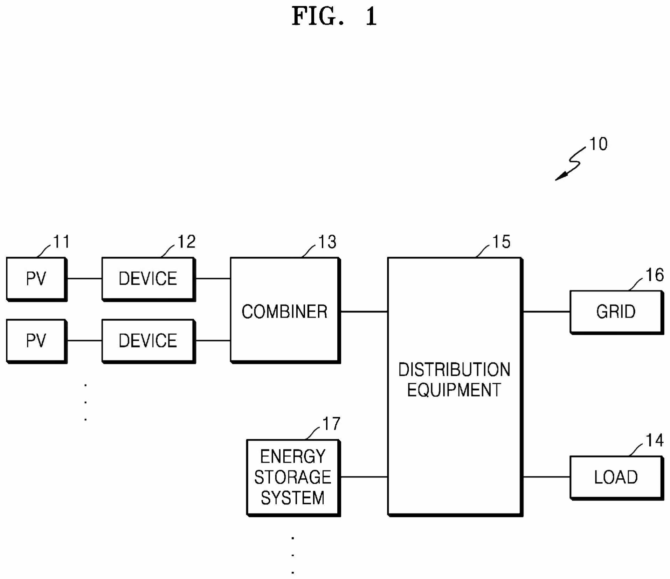

FIG. 1 is a schematic view of a power supply system.

Referring to FIG. 1, a power supply system 10 may include a solar module 11, a device 12, a load 14, and/or a distribution device 15. The power supply system 10 may be connected to an external power grid 16.

At least one solar module 11 may be installed on a roof or exterior wall of a building to generate power. The solar module 11 may be arranged as a plurality of solar modules 11 which are connected to form a solar module array.

The solar module 11 may be connected to the device 12. For example, at least one device 12 may be connected to each solar module 11. As an example, in case that one device 12 is connected to each solar module 11, the number of devices 12 constituting the power supply system 10 may be the same as the number of solar modules 11.

The device 12 may be a power conditioning system or power conversion system (PCS) which performs power conversion on power generated from the solar module 11. For example, the device 12 may perform a certain conversion on power generated from the solar module 11, and supply the converted power to other components (e.g., the power grid 16 and/or the load 14) of the power supply system 10.

The device 12 may be module level power electronics (MLPE). For example, the device 12 may be an optimizer or a micro inverter (MI).

As an example, in case that the device 12 is an optimizer, the device 12 may adjust power produced from the solar module 11 and output the adjusted power to an inverter (e.g., a string inverter). A current converted by the inverter (e.g., alternating current (AC) converted from direct current (DC)) may be output to the power grid 16 or the load 14.

As another example, in case that the device 12 is a micro inverter, the device 12 may convert power generated from the solar module 11 (e.g., convert DC into AC). The current converted in the device 12 may be output to the power grid 16 or the load 14.

The power supply system 10 may further include a combiner 13, if necessary. At least some of the at least one device 12 may be connected to the distribution device 15 through the combiner 13. For example, power output from the at least one device 12 may be combined into one output in the combiner 13, and supplied to the distribution device 15.

In some embodiments, the device 12 and the distribution device 15 may be connected by a power path, which does not include the combiner 13. At least one device 12 may be connected to the distribution device 15 along the power path, which does not include the combiner 13, while at least one other device 12 may be connected to the distribution device 15 via the combiner 13.

The combiner 13 may perform control of voltage, current, and/or power, output from the device 12, according to a power supply status of the solar module 11, the device 12, and/or the power grid 16, and an operation mode of the combiner 13 may be set to a diagnosis mode or a driving mode.

The combiner 13 may include an energy management system (EMS) which controls the operation of the combiner 13. The EMS may perform control of voltage, current, and/or power, which are/is supplied to the combiner 13 or output from the combiner 13, according to the power supply status of the solar module 11, the device 12, and/or the power grid 16, and an operation mode of the combiner 13 may be set to the diagnosis mode or the driving mode.

The load 14 may refer to an object which is installed in an electric power customer, such as a house, commercial facility, or factory, and operates by receiving at least one of energy generated by the solar module 11, energy stored in an energy storage device 17, and/or energy supplied from the power grid 16. For example, in case that an electric power customer receiving power is a house, the load 14 may include home appliances, such as a washing machine, a refrigerator, or a TV.

The power grid 16 may include infrastructure systems for generating, transmitting, and distributing power. For example, the power grid 16 may include infrastructure systems, such as power plants, substations, and power lines. In some embodiments, the power grid 16 may transmit electric energy generated at a power plant to the power supply system 10 or transmit surplus power generated in the power supply system 10 to the outside of the power supply system 10.

For example, commercial power, which is transmitted from the power grid 16 through a power pole, may be supplied to a power consumer through a transformer. In some embodiments, the power supply system 10 may be implemented as an off-grid system which is not connected to the power grid 16.

The power supply system 10 may further include at least one energy storage device 17. The power supply system 10 may include a plurality of energy storage devices 17, if necessary. The energy storage device 17 may receive and store power generated by the solar module 11 and/or power transmitted from the power grid 16. The energy storage device 17 may efficiently supply power by storing power and supplying power to the load 14 when the load 14 needs power.

The energy storage device 17 may include a battery which stores power and a power conversion module. The battery may include a battery management system (BMS) which monitors SOC, SOH, voltage, and/or current of the battery, performs diagnosis of the battery, and performs a safety function, such as current cutoff.

The power conversion module may be a PCS which performs conversion between battery-side power and opposite-side power. For example, the PCS may convert between battery-side DC and opposite-side AC. As an example, the PCS may include a bidirectional DC-DC converter which is connected to the battery and converts voltage, and a bidirectional inverter which connects the DC-DC converter and the outside of the energy storage device 17.

The energy storage device 17 may further include an EMS which controls the operation of the energy storage device 17. The EMS may perform control of voltage, current, and/or power, which are/is supplied to the energy storage device 17 or output from the energy storage device 17, according to a power supply status of the battery and/or the power grid 16, and an operation mode of the energy storage device 17 may be set to a diagnosis mode or a driving mode.

As needed, the EMS coupled to a certain component of the power supply system 10 may control not only the operation of the corresponding component, but also the operations of other components of the power supply system 10. For example, an EMS coupled to the combiner 13 or an EMS coupled to the energy storage device 17 may control both the operation of the combiner 13 and the operation of the energy storage device 17.

In some embodiments, the distribution device 15 may provide electrical connection between components of the power supply system 10 and may control a power flow of the power supply system 10. For example, the distribution device 15 may electrically connect the solar module 11 and the load 14. As an example, the distribution device 15 may be connected to the device 12, which is connected to the solar module 11, to electrically connect the solar module 11 and the load 14. The distribution device 15 may be further connected, if needed, to at least one of the energy storage device 17 and the power grid 16.

For example, the distribution device 15 may be a distribution panel which distributes power inside the power supply system 10. As an example, the distribution device 15 may be a master service panel (MSP) which distributes power generated from the solar module 11 to the load 14, and the like.

As another example, the distribution device 15 may be a main controller which performs power distribution inside the power supply system 10 and controls each device 12. As an example, the main controller may include a switch, a circuit breaker, and a control unit. The switch, circuit breaker, and control unit may each be implemented as independent devices, or at least some of the switch, the circuit breaker, and the control unit may be included in a single device.

The main controller may include a switch which controls electrical connections between components, such as the device 12 and the load 14, connected to the main controller. For example, the main controller may include a relay or power semiconductor which enables or blocks electrical connection to the device 12 and/or the energy storage device 17 depending on an operating status of each component of the power supply system 10.

The main controller may perform an emergency shutdown (rapid shutdown) to stop the power generation of the solar module 11 in emergency situations, such as an overcurrent occurrence, in the power supply system 10. For this purpose, the main controller may include a circuit breaker which cuts off the connection between the device 12 and the load 14.

The main controller may include a control unit which generally controls the operation of the main controller. In addition to the main controller, the control unit may control operations of other components (e.g., the device 12 or the energy storage device 17) of the power supply system 10.

The control unit may perform control of voltage, current, and/or power, which are/is output from or supplied to each component, according to a power supply status of the solar module 11, the device 12, the combiner 13, the load 14, the power grid 16, and/or the energy storage device 17. The control unit may set the operation mode of the main controller, the device 12, and/or the energy storage device 17 to a diagnosis mode or a driving mode.

For example, the control unit may control the solar module 11, the device 12, the combiner 13, and/or the energy storage device 17 based on the status of the power supply system 10. As an example, the control unit may cause the main controller to communicate with other components (e.g., the device 12 and the like) of the power supply system 10, thereby controlling the other components of the power supply system 10. The communication between the main controller and the other components of the power supply system 10 may be performed using power line communication (PLC), but is not limited thereto.

As an example, the control unit may control the device 12 according to the power generation status of the solar module 11. For example, the main controller may receive a control command from a server which monitors the power generation status of the solar module 11, and the control unit may control the device 12 according to the control command.

The main controller may supply power to at least some of the loads 14 in case that power supply from the power grid 16 is not smooth (e.g., in an off-grid situation). For example, in case that power supply from the power grid 16 is not smooth, the main controller may preferentially supply power generated from the solar module 11 and/or power stored in the energy storage device 17 to a backup load, which has a relatively high need for a stable power supply.

In some embodiments, the power supply system 10 may further include an auxiliary power generation device (e.g., a diesel generator, and the like) which generates power in a separate manner other than solar power generation. For example, an auxiliary power generation device may be further connected to the distribution device 15. In case that the backup load cannot be handled by only the solar module 11 and the energy storage device 17 due to environmental factors, such as time zone or weather, the main controller may supply power generated from the auxiliary power generation device to the backup load.

The control unit may be implemented by at least one processor. The at least one processor may process instructions in a computer program by performing basic arithmetic, logic, and input/output operations. Here, instructions may be provided from an internal memory of the main controller or from an external device. The at least one processor may control the overall operations of other components included in the main controller.

In some embodiments, the at least one processor may perform at least some of data analysis, processing, and result information generation for performing the above-described operations by using at least one of machine learning, neural network, or deep learning algorithm as a rule-based or artificial intelligence algorithm. Examples of neural network models may include neural network models based on architectures, such as convolutional neural network (CNN), deep neural network (DNN), and recurrent neural network (RNN).

For example, the at least one processor may be implemented as an array of a plurality of logic gates, or as a combination of a general-purpose microprocessor and a memory storing a program which may be executed by the microprocessor. For example, the at least one processor may include a general-purpose processor, a central processing unit (CPU), a microprocessor, a digital signal processor (DSP), a controller, a microcontroller, a state machine, and the like.

In some environments, the at least one processor may include an application-specific integrated circuit (ASIC), a programmable logic device (PLD), a field programmable gate array (FPGA), and the like. For example, the at least one processor may refer to a combination of processing devices, such as a combination of a digital signal processor (DSP) and a microprocessor, a combination of a plurality of microprocessors, a combination of at least one microprocessor coupled to a core of the digital signal processor (DSP), or any other combinations of such configurations.

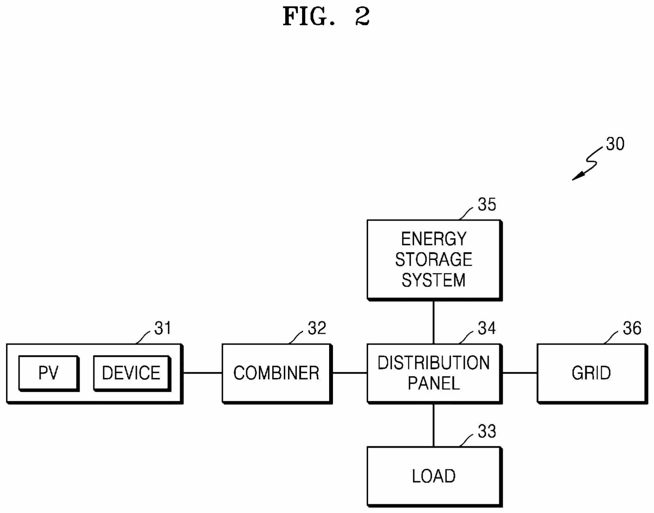

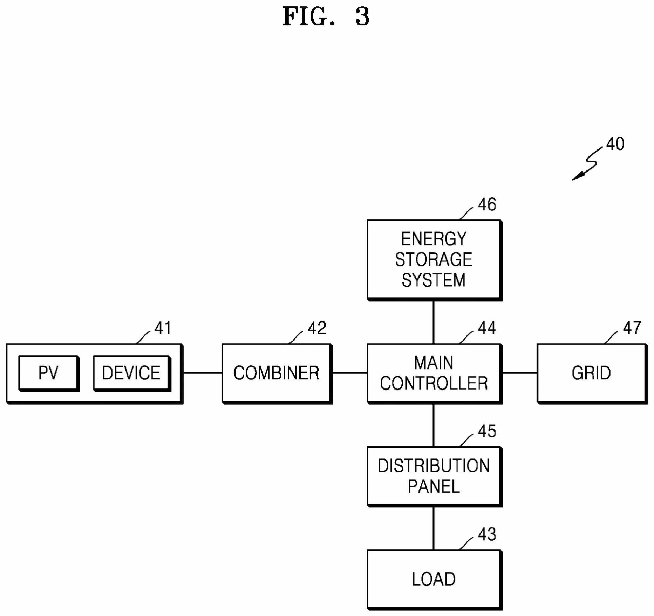

By combining at least some of the components described above, the power supply system 10 may be implemented in various forms. Hereinafter, various embodiments of the power supply system 10 will be described with reference to FIGS. 2 and 3. However, a method of implementing the power supply system 10 is not limited to the embodiment described below.

FIG. 2 is a schematic view of a power supply system according to an embodiment.

Referring to FIG. 2, a power supply system 30 according to an embodiment may include a solar power generation device 31, a combiner 32, a load 33, a distribution panel 34, and an energy storage device 35. The power supply system 30 may be connected to an external power grid 36.

In an embodiment, the energy storage device 35 may be connected to the distribution panel 34 to be charged or discharged. In another embodiment, the energy storage device 35 may be connected to the combiner 32 to be charged or discharged.

The power supply system 30 may further include the energy storage device 35. Accordingly, in case that the load 33 cannot be handled by the solar power generation device 31 alone, power stored in the energy storage device 35 may be used to handle the load 33. In case that power generated by the solar power generation device 31 exceeds an amount of power required to handle the load 33, surplus power may be stored in the energy storage device 35. In some embodiments, in case that an amount of power charged in the energy storage device 35 is below a threshold value and power generated by the solar power generation device 31 does not exceed an amount of power required to handle the load 33, power supplied from the power grid 36 may be charged in the energy storage device 35.

Accordingly, the power supply system 30 may perform efficient power supply to the load 33 using the energy storage device 35.

In some embodiments, the combiner 32 may perform control of voltage, current, and/or power, output from the solar power generation device 31, according to a power supply status of the solar power generation device 31, the load 33, and/or the power grid 36, and an operation mode of the combiner 32 may be set to a diagnosis mode or a driving mode.

The energy storage device 35 may perform control of voltage, current, and/or power, which are/is supplied to the energy storage device 31 or output from the energy storage device 35, according to the power supply status of the solar power generation device 36, the load 33, and/or the power grid 36, and an operation mode of the energy storage device 35 may be set to a diagnosis mode or a driving mode.

In an embodiment, the power supply system 30 may further include a sub-panel (not shown) connected to the distribution panel 34. At this time, at least one solar power generation device 31 may be connected to the sub-panel through the combiner 32, and at least one other solar power generation device 31 may be directly connected to the sub-panel.

At least one energy storage device 35 may be integrated into the power supply system 30 by being connected to the combiner 32, the distribution panel 34, or the sub-panel.

In some embodiments, at least one solar power generation device 31 and the distribution panel 34 may be connected along a power path which does not include the combiner 32. For example, at least one solar power generation device 31 may be connected to the distribution panel 34 along the power path which does not include the combiner 32, and at least one other solar power generation device 31 may be connected to the distribution panel 34 through the combiner 32.

In an embodiment, at least one solar power generation device 31 may be connected to the sub-panel through the combiner 32, and at least one other solar power generation device 31 may be directly connected to the sub-panel.

The power supply system 30 may include the sub-panel which provides an additional capacity, resulting in increasing a total amount of power generated in the solar power generation device 31, which may be integrated into the power supply system 30.

FIG. 3 is a schematic view of a power supply system according to another embodiment.

Referring to FIG. 3, a power supply system 40 according to an embodiment may include a solar power generation device 41, a combiner 42, a load 43, a main controller 44, a distribution panel 45, and an energy storage device 46. The power supply system 40 may be connected to an external power grid 47.

In some embodiments, the solar power generation device 41, the combiner 42, the load 43, and the energy storage device 46 illustrated in FIG. 3 may correspond to the solar power generation device 31, the combiner 32, the load 33, and the energy storage device 35 illustrated in FIG. 2, respectively. The main controller 44 shown in FIG. 3 may correspond to the main controller described above with reference to FIG. 1.

The combiner 42 may electrically connect at least one solar power generation device 41 and the main controller 44. For example, the combiner 42 may combine power output from the at least one solar power generation device 41 into one output, to supply the power to the main controller 44.

The main controller 44 may electrically connect the combiner 42, the distribution panel 45, and the power grid 47. The main controller 44 may connect the above-described components and the energy storage device 46 and/or an auxiliary power source, such as an auxiliary power generation device (e.g., a diesel generator). For example, the main controller 44 may output power supplied from the combiner 42 to the distribution panel 45, the energy storage device 46, and/or the power grid 47. The main controller 44 may output power supplied from the power grid 47 to the distribution panel 45 or the energy storage device 46. The main controller 44 may output power supplied from the energy storage device 46 to the distribution panel 45.

The distribution panel 45 may electrically connect the main controller 44 and at least one load 43. With the configuration, the power supply system 40 may supply power generated from the solar power generation device 41 to the load 43 through the distribution panel 45.

The power supply system 40 may integrate a plurality of energy storage devices 46 and/or auxiliary power generation devices into the power supply system 40 by including the main controller 44, thereby stably supplying power. The power supply system 40 may also stably supply power to the load 43, such as a backup load, even in an off-grid environment where power cannot be stably supplied from the power grid 47.

In some embodiments, the main controller 44 may perform control of voltage, current, and/or power, output from or supplied to each component, according to the status of the solar power generation device 41, the load 43, the energy storage device 46, and/or the power grid 47, and an operation mode of the main controller 44, the solar power generation device 41, and/or the energy storage device 46 may be set to a diagnosis mode or a driving mode.

In an embodiment, the power supply system 40 may further include a sub-panel (not shown), which is connected to the main controller 44 and distinct from the distribution panel 45. At this time, at least one backup load, which has a relatively high need for stable power supply among the loads 43, may be connected to the sub-panel, and at least one non-backup load, which has a relatively low need for stable power supply among the loads 43, may be connected to the distribution panel 45.

The main controller 44 may electrically connect the combiner 42, the distribution panel 45, the energy storage device 46, the power grid 47, and the sub-panel. The main controller 44 may supply power supplied from the combiner 42, the energy storage device 46 and/or the power grid 47 to at least one non-backup load through the distribution panel 45, and supply power to a backup load through the sub-panel.

In an embodiment, the power supply system 40 may further include a sub-panel which is connected to the main controller 44 and distinct from the distribution panel 45, and the power grid 47 may be connected to the distribution panel 45, instead of being connected to the main controller 44. For example, the main controller 44 may electrically connect the combiner 42, the distribution panel 45, the energy storage device 46, and the sub-panel, and the distribution panel 45 may electrically connect the main controller 44, a non-backup load, and the power grid 47.

For example, the power supply system 40 may be implemented by connecting the main controller 44, which connects the combiner 42 and the energy storage device 46, to the distribution panel 45 which is pre-installed to connect at least one load 43 and the power grid 47.

Accordingly, the power supply system 40 may stably supply power to the load 43, such as a backup load, even in an off-grid environment where power cannot be stably supplied from the power grid 47.

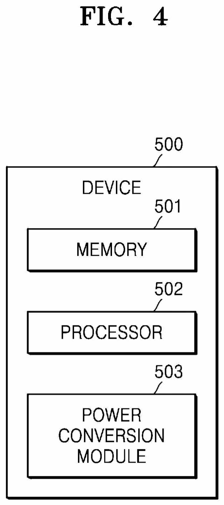

FIG. 4 is a block diagram of a power conversion device according to an embodiment.

Referring to FIG. 4, a power conversion device 500 (hereinafter, referred to as 'device 500') may include a memory 501, a processor 502, and a power conversion module 503.

For example, the device 500 of FIG. 4 may be included in the device 12 or the energy storage device 17 of FIG. 1. In another example, the device 500 may be included in the energy storage device 35 of FIG. 2 or the energy storage device 46 of FIG. 3.

The memory 501 may be a hardware component which stores various data processed in the device 500 and may store programs for processing and controlling the processor 502 and the power conversion module 503.

The memory 501 may include random access memory (RAM), such as dynamic random access memory (DRAM), and static random access memory (SRAM), read-only memory (ROM), electrically erasable programmable read-only memory (EEPROM), CD-ROM, Blu-ray or other optical disk storage, hard disk drive (HDD), solid state drive (SSD), or a flash memory.

The processor 502 may control an overall operation of the device 500. For example, the processor 502 may generally control the memory 501 and the power conversion module 503 by executing the programs stored in the memory 501.

The processor 502 may control the operation of the device 500 and the power conversion module 503 included in the device 500 by executing the programs stored in the memory 501. The processor 502 may control at least some of operations of the device 500 and the power conversion module 503 included in the device 500.

The processor 502 according to an embodiment may apply a first carrier signal and a control signal (reference signal) to a first full-bridge inverter, and may apply a second carrier signal and the control signal to a second full-bridge inverter.

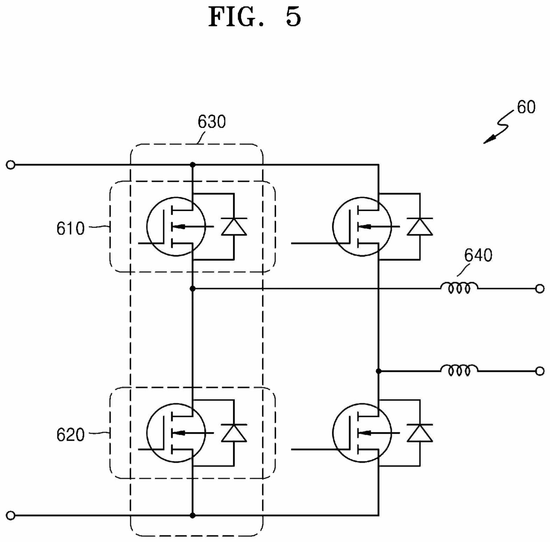

The first full-bridge inverter may be a circuit implemented as a full-bridge inverter including a plurality of switches. Each of the plurality of switches may include a switching element. Each switch may further include a diode and a capacitor connected in parallel with the switching element. The full-bridge inverter may have a full-bridge configuration, and circuit elements included in the full-bridge configuration and the connection relationship among the respective elements will be described later with reference to FIG. 5.

The switching element may refer to an element which operates by repeatedly switching on and off states to convert power. The switching element may be, for example, a metal-oxide-semiconductor field-effect transistor (MOSFET), an insulated gate bipolar transistor (IGBT), or a bipolar junction transistor (BJT).

The first carrier signal may be a signal applied in the form of a voltage and may be applied to the plurality of switches included in the first full-bridge inverter. The first carrier signal may be a voltage waveform having a constant period, for example, may be a triangle wave, a square wave, or a sine wave. The first carrier signal may be applied simultaneously with a control signal being applied to the plurality of switches.

The second full-bridge inverter may have a circuit structure implemented as a full-bridge inverter, which includes a plurality of switches, and may be structurally identical to the first full-bridge inverter.

The second carrier signal, similar to the first carrier signal, may be a signal applied in the form of a voltage and may be applied to the plurality of switches included in the second full-bridge inverter. The second carrier signal may be a voltage waveform having a constant period, for example, may be a triangle wave, a square wave, or a sine wave. The second carrier signal may be applied simultaneously with the control signal being applied to the plurality of switches.

The control signal may be a signal applied in the form of a voltage, and may be applied to the plurality of switches included in the first full-bridge inverter and the plurality of switches included in the second full-bridge inverter. The control signal may be a voltage waveform having a constant period, for example, may be a sine wave, a triangular wave, or a square wave. The control signal may act as a gate signal for each of the plurality of switches.

The processor 502 according to an embodiment may control a first switch and a second switch, so that the sum of currents detected by the plurality of current sensors is 0.

A current sensor may be an element which detects the magnitude and direction of a current and converts the detected result into an electrical signal. For example, the current sensor may correspond to a current transformer (CT), an optical current sensor, a hall effect current sensor, or the like. The plurality of current sensors may be connected one each to the first full-bridge inverter, the second full-bridge inverter, and a third inductor.

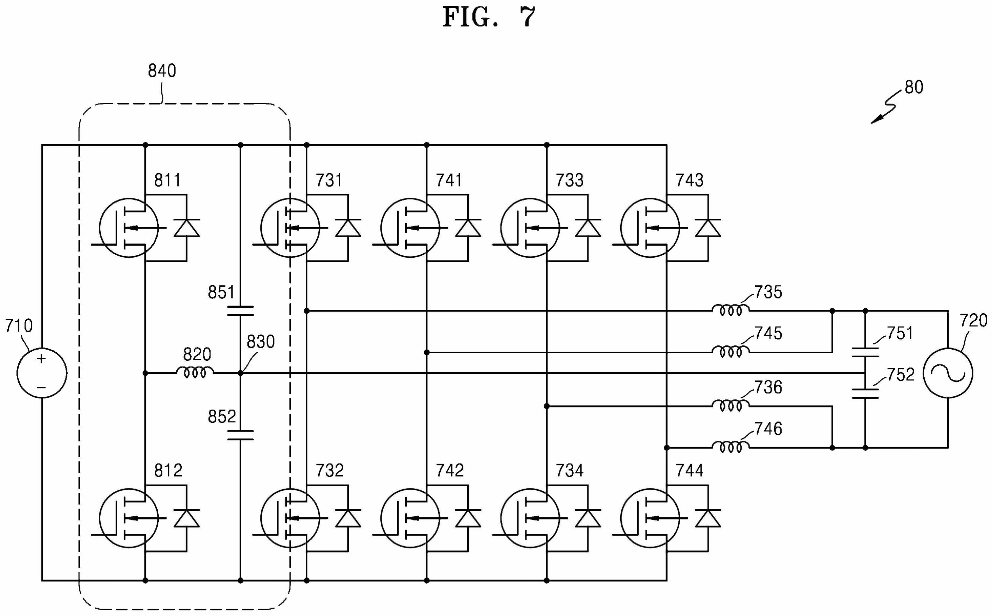

The first switch and the second switch may each include a switching element, which may be the same element as the switch included in the full-bridge inverter described above. The third inductor may be an inductor element. The connection relationship between the plurality of current sensors and each of the first switch, the second switch, and the third inductor, and a circuit structure including the same will be described later with reference to FIG. 7.

The processor 502 according to an embodiment may generate a pulse width modulation (PWM) signal for controlling ON/OFF of each of the first switch and the second switch. The PWM signal may be a pulsed direct current (DC) voltage signal. At this time, the processor 502 may generate a different PWM signal by adjusting a width of a pulse. The processor 502 may adjust the width of the pulse by adjusting a duty cycle of the pulse. The duty cycle may refer the proportion of time for which a signal is on at a certain frequency.

A PWM signal having a certain frequency may have a repetitive ON/OFF state, thereby controlling ON/OFF of each of the first switch and the second switch. The PWM signals applied to the first switch and the second switch, respectively, may be different from each other.

In some embodiments, a detailed description of various operations of the device 500 which may be performed by the processor 502 will be described later with reference to FIGS. 5 to 10.

The processor 502 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

The power conversion module 503 may be a component which performs conversion between direct current (DC) power (voltage) and alternating current (AC) power (voltage), and may perform conversion on an input voltage. For example, the power conversion module 503 may convert DC link power received from a power plant, or the like into AC power. The power supply system 10 described above with reference to FIG. 1 may transmit an output voltage, which is generated as a result of the operation of the power conversion module 503, to the external power grid 16.

The power conversion module 503 may include a circuit board which provides a support base for internal components included in the power conversion module, and various circuit elements arranged on the circuit board. The circuit board may provide a support base for components included in the power conversion module and internal components including various circuit elements.

The circuit elements arranged on the circuit board may include all of passive components, such as resistors, inductors, and capacitors, or active components, such as transistors and diodes.

For example, the power conversion module 503 may include an input circuit, an output circuit, a first full-bridge inverter, and a second full-bridge inverter. The input circuit may be a circuit which obtains an input voltage. The output circuit may be a circuit which obtains an output voltage. The input voltage may be a DC voltage input, and the output voltage may be an AC output voltage.

Examples of the input circuit, the output circuit, the first full-bridge inverter, and the second full-bridge inverter included in the power conversion module 503 will be described in detail with reference to FIGS. 5 to 7.

FIG. 5 is a schematic view of an example of a circuit of a first full-bridge inverter constituting a power conversion device according to an embodiment.

According to an embodiment, the first full-bridge inverter may include two legs connected in parallel to the input circuit. For example, the two legs may include a first leg 630 and a second leg. The first leg 630 and the second leg may have the same structure. Therefore, the following description will focus on the first leg 630.

The first leg 630 may include two switches 610 and 620. For example, the first full-bridge inverter may be a circuit 60 which is implemented as a full-bridge inverter including four switches.

The device 500 may control ON/OFF of the two switches 610 and 620 included in a corresponding leg 630 based on a first carrier signal applied to one of the legs. The device 500 may control ON/OFF of the two switches 610 and 620 based on a difference between a first carrier signal and a control signal applied to one of the legs.

The first full-bridge inverter may be connected to a first inductor 640. The first inductor 640 may be connected to at least one of the two legs included in the first full-bridge inverter. For example, two first inductors 640 may be connected to each of the first leg 630 and the second leg of the first full-bridge inverter.

The first inductor 640 may be connected between the two switches 610 and 620 included in the first leg 630. The first inductor 640 may be connected to a center between the upper switch 610 and the lower switch 620 included in the first leg 630. At this time, the upper switch 610 may be connected to a positive (+) terminal of a DC power source of the input circuit. The lower switch 620 may be connected to a negative (-) terminal of the DC power source of the input circuit or to ground.

In an embodiment, the second full-bridge inverter may have the same structure as the first full-bridge inverter. For example, the second full-bridge inverter may include two legs connected in parallel to the input circuit. For example, the second full-bridge inverter may be a circuit 60 implemented as a full-bridge inverter including four switches.

The second full-bridge inverter may be connected to a second inductor. The second inductor may be connected to at least one of the two legs included in the second full-bridge inverter. For example, the second full-bridge inverter may be connected to two second inductors connected to each of the two legs.

The first inductor 640 and the second inductor may each be connected to an output circuit which generates an output voltage. The first inductor 640 and the second inductor may perform an LC filter function for the output of each leg. The first inductor 640 and the second inductor may perform smoothing of an output current of each leg and suppress noise generated during a rapid switching process. Accordingly, the device 500 may stably generate an AC output voltage.

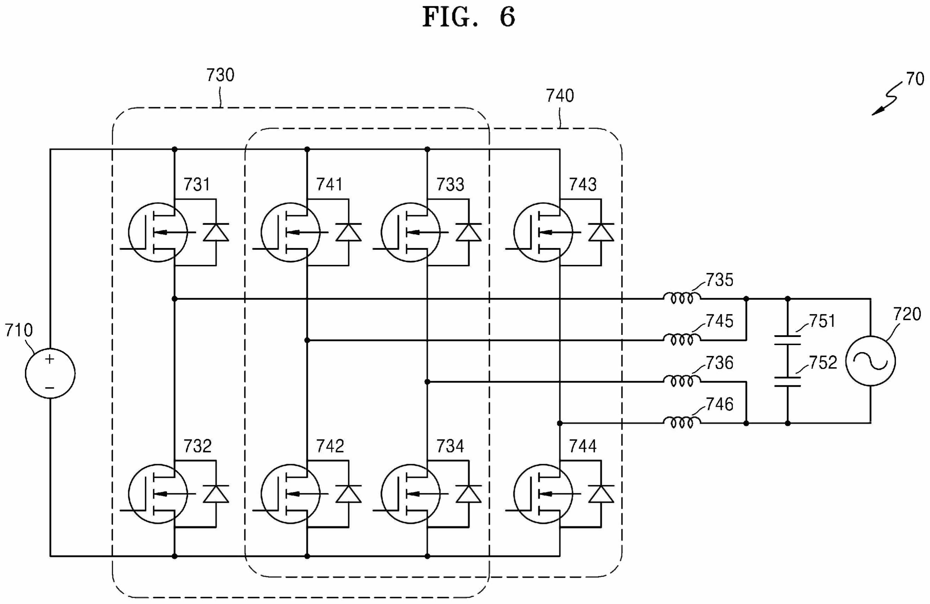

For example, the first full-bridge inverter and the second full-bridge inverter may each include the same circuit structure as a single-phase bipolar inverter. A method by which the plurality of switches included in each of the first full-bridge inverter and the second full-bridge inverter operate will be described later with reference to FIG. 6.

FIG. 6 is a schematic view of an example of an interleaved bipolar inverter constituting a power conversion device according to an embodiment.

A device 500 according to an embodiment may include an input circuit 710 which generates an input voltage, a first full-bridge inverter 730 and a second full-bridge inverter 740 which are connected to the input circuit 710, at least one first inductor 735 and 736 connected to the first full-bridge inverter 730, at least one second inductor 745 and 746 connected to the second full-bridge inverter 740, and an output circuit 720 connected to the at least one first inductor 735 and 736 and the at least one second inductor 745 and 746 to generate an AC output voltage.

At this time, the device 500 may include a capacitor 751 connected to the at least one first inductor 735 and 736 and a capacitor 752 connected to the at least one second inductor 745 and 746. The capacitors 751 and 752 may perform charging/discharging to alleviate voltage changes which occur during a switching operation.

For example, the capacitor 751 may perform charging to store a charge in case that a voltage transmitted through the at least one first inductor 735 and 736 increases rapidly. As another example, in case that the voltage transmitted through the at least one first inductor 735 and 736 decreases rapidly, the capacitor 751 may perform discharging to release the stored charge. This may be done similarly for the capacitor 752 and the at least one second inductor 745 and 746. Accordingly, an output voltage ripple may be eliminated and the output voltage may be stabilized.

The device 500 according to an embodiment may include at least one processor which applies a first carrier signal and a control signal to the first full-bridge inverter 730 and applies a second carrier signal and the control signal to the second full-bridge inverter 740. Based on the first carrier signal and the control signal, a plurality of switches 731, 732, 733, and 734 included in the first full-bridge inverter 730 may operate. Based on the second carrier signal and the control signal, a plurality of switches 741, 742, 743, and 744 included in the second full-bridge inverter 740 may operate.

According to an embodiment, the first full-bridge inverter 730 and the second full-bridge inverter 740 may be connected in parallel to the input circuit 710. As the control signal, the first carrier signal, and the second carrier signal are applied, the first full-bridge inverter 730 and the second full-bridge inverter 740 connected in parallel may operate in an interleaved manner.

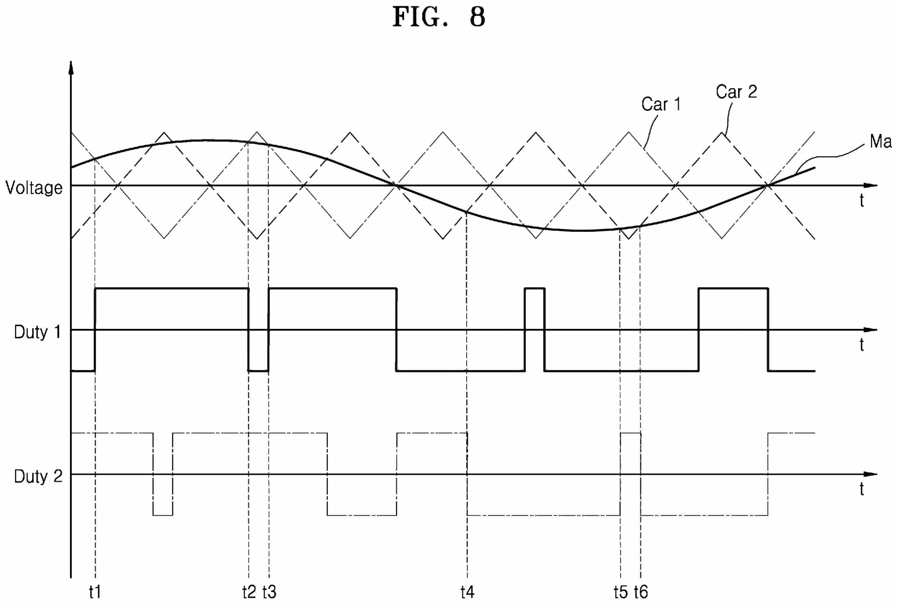

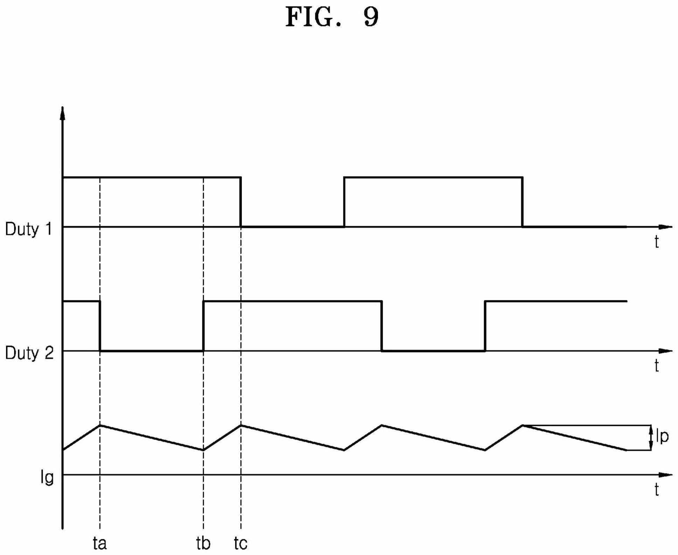

For example, one bipolar inverter which includes the first full-bridge inverter 730 and the at least one first inductor 735 and 736 may operate, and the remaining one bipolar inverter which includes the second full-bridge inverter 740 and the at least one second inductor 745 and 746 may operate. At this time, the two bipolar inverters may operate in an interleaved manner. The detailed process of applying the control signal, the first carrier signal, and the second carrier signal and a method of performing the interleaved operation accordingly will be described later with reference to FIGS. 8 and 9.

FIG. 7 is a schematic view of an example of an interleaved bipolar inverter employing a one-leg technique according to an embodiment.

According to an embodiment, a device 500 may include a first switch 811 and a second switch 812 each connected to the input circuit 710, and a third inductor 820 connected to the first switch 811 and the second switch 812. The device 500 may further include a plurality of current sensors 850 connected to each of the at least one first inductor 735 and 736, the at least one second inductor 745 and 746, and the third inductor 820.

The first switch 811 may be connected to a positive side of an input voltage source included in the input circuit 710. For example, the first switch 811 may be connected to a positive (+) electrode of a DC link. As another example, the second switch 812 may be connected to a negative electrode side of the input voltage source of the input circuit 710. For example, the second switch 812 may be connected to a negative (-) electrode of the DC link.

In an embodiment, the first switch 811, the second switch 812, and the third inductor 820 may be connected to a neutral point 830 node. The neutral point 830 may refer to a reference point at which a voltage between the positive and negative electrodes of the DC link may be divided and a symmetrical voltage may be supplied.

The neutral point 830 may refer to a point corresponding to the center of a three-phase system. The neutral point 830 may be the center of a Y-connected circuit to which the first switch 811, the second switch 812, and the third inductor 820 are connected, as shown in FIG. 7.

According to an embodiment, at least one processor 502 may perform current control relative to the neutral point 830 node. The at least one processor 502 may perform current control so that the sum of currents of a single-phase three-wire system is 0.

For example, the at least one processor 502 may generate a PWM signal to control ON/OFF of the first switch 811 and the second switch 812 connected to the neutral point 830 node. At this time, the at least one processor 502 may control the first switch 811 and the second switch 812 so that the sum of currents detected by the plurality of current sensors 850 is 0. For example, the PWM signal generated by the at least one processor 502 may be a voltage signal which causes the sum of currents detected by the plurality of current sensors 850 to be 0.

The at least one processor 502 may calculate a signal required for control using a certain control algorithm, and generate a PWM signal. The certain control algorithm may be an algorithm which generates a signal required for compensation based on measured current values. For example, in case that the sum of current values measured from the plurality of current sensors 850 is not 0, the at least one processor 502 may calculate a compensation current using the certain control algorithm and generate a PWM signal for generating the compensation current. The certain control algorithm may be, for example, a proportional-integral (PI) control algorithm or a support vector machine (SVM) algorithm, but is not limited thereto.

The generated PWM signal may include both a first PWM signal applied to the first switch 811 and a second PWM signal applied to the second switch 812. In case that the first PWM signal is applied to the first switch 811, ON/OFF of the first switch 811 may be controlled. At the same time, in case that the second PWM signal is applied to the second switch 812, ON/OFF of the second switch 812 may be controlled. Through this, the at least one processor 502 may change or offset a flow of each current at the neutral point 830 node.

In case that the sum of currents at the neutral point 830 node is maintained at 0, the voltage at the neutral point 830 may be maintained at a constant value. For example, the voltage at the neutral point 830 may be maintained at a value corresponding to the middle of the voltage between the positive and negative electrodes of each DC link.

For example, by controlling the sum of currents at the neutral point 830 node to be maintained at 0, the voltage may be maintained evenly. As a result, an input voltage may be split into two symmetrical voltages. For example, split-phase symmetrical voltages may be generated.

In this way, the device 500 may split a single-phase voltage based on the neutral point 830. For example, the device 500 may supply a voltage of DC 240 V by splitting into voltages of AC 120 V.

In some embodiments, the operation of controlling the first switch 811, the second switch 812, and the third inductor 820 and the operation of controlling the interleaved bipolar inverter 70 described above with reference to FIG. 6 may not affect each other.

FIG. 8 is a schematic view of a method of operating each switch included in a power conversion device according to an embodiment.

Referring to FIG. 8, as an example, the processor 502 may apply a control signal Ma in the form of a sine wave and a first carrier signal Car1 and a second carrier signal Car2 each in the form of a square wave.

According to an embodiment, the processor 502 may apply the first carrier signal Car1 to any one of the legs included in the first full-bridge inverter. For example, the processor 502 may apply the first carrier signal Car1 to a leg including the switches 731 and 732. Accordingly, the device 500 may control ON/OFF of the switches 731, 732, 733, and 734 included in the first full-bridge inverter.

According to an embodiment, the first full-bridge inverter may operate based on a difference between the first carrier signal Car1 and the control signal Ma. The processor 502 may control specific switches included in the first full-bridge inverter to be switched on depending on whether the difference between the first carrier signal Car1 and the control signal Ma is a positive value.

For example, during a time between t1 and t2, the first carrier signal Car1 may have a value smaller than the control signal Ma. At this time, the upper switch 731 may be switched on and the lower switch 732 may be switched off. In another example, during a time between t2 and t3, the first carrier signal Car1 may have a value greater than the control signal Ma. At this time, the upper switch 731 may be switched off and the lower switch 732 may be switched on.

At this time, the upper switch 731 and the opposite switch 734 may perform the same ON/OFF operation. In some embodiments, the lower switch 732 and the opposite switch 733 may perform the same ON/OFF operation. For example, a certain pair of switches 731 and 734 and another pair of switches 732 and 733 may operate complementarily to each other.

As the first carrier signal Car1 and the control signal Ma are applied, an ON/OFF waveform Duty 1 of the certain pair of switches 731 and 734 may be output. At this time, the ON/OFF waveform Duty 1 may be determined according to each waveform of the first carrier signal Car1 and the control signal Ma. For example, the duty cycle of the ON/OFF waveform Duty 1 may be determined according to each period of the first carrier signal Car1 and the control signal Ma. In some embodiments, an ON/OFF waveform (not shown) of another pair of switches 732 and 733 may have a complementary form to Duty 1.

According to an embodiment, the processor 502 may apply the second carrier signal Car2 to one of the legs included in the second full-bridge inverter. For example, the processor 502 may apply the second carrier signal Car2 to a leg including the switches 741 and 742. Accordingly, the device 500 may control ON/OFF of the switches 741, 742, 743, and 744 included in the second full-bridge inverter.

According to an embodiment, the second full-bridge inverter may operate based on a difference between the second carrier signal Car2 and the control signal Ma. The processor 502 may control specific switches included in the second full-bridge inverter to be switched on depending on whether the difference between the second carrier signal Car2 and the control signal Ma is a positive value.

For example, during a time between t4 and t5, the second carrier signal Car2 may have a value greater than the control signal Ma. At this time, the upper switch 741 may be switched off and the lower switch 742 may be switched on. In another example, during a time between t5 and t6, the second carrier signal Car2 may have a value smaller than the control signal Ma. At this time, the upper switch 741 may be switched on and the lower switch 742 may be switched off.

At this time, the upper switch 741 and the opposite switch 744 may perform the same ON/OFF operation. In some embodiments, the lower switch 742 and the opposite switch 743 may perform the same ON/OFF operation. For example, a certain pair of switches 741 and 744 and another pair of switches 742 and 743 may operate complementarily to each other.

As the second carrier signal Car2 and the control signal Ma are applied, an ON/OFF waveform Duty 2 of the certain pair of switches 741 and 744 may be output. At this time, the ON/OFF waveform Duty 2 may be determined according to each waveform of the second carrier signal Car2 and the control signal Ma. For example, the duty cycle of the ON/OFF waveform Duty 2 may be determined according to each period of the second carrier signal Car2 and the control signal Ma. In some embodiments, an ON/OFF waveform (not shown) of another pair of switches 742 and 743 may have a complementary form to Duty 2.

In an embodiment, the first carrier signal Car1 may have the same switching period as the second carrier signal Car2. The switching period may refer to a period of a voltage signal for controlling each switch. The first carrier signal Car1 and the second carrier signal Car2 may have a certain phase difference. The certain phase difference may be, for example, a half period (180°).

Accordingly, the first full-bridge inverter and the second full-bridge inverter may each operate based on the first carrier signal and the second carrier signal, which are waveforms of the same period with the certain phase difference. At this time, the first full-bridge inverter to which the first carrier signal is applied and the second full-bridge inverter to which the second carrier signal is applied may operate with a certain time difference. For example, the first full-bridge inverter and the second full-bridge inverter may operate in an interleaved manner.

FIG. 9 is a schematic view of an example of a waveform of a grid current Ig of a power conversion device according to an embodiment.

Referring to FIG. 9, the period of each of the ON/OFF waveform Duty 1 of the certain pair of switches 731 and 734 included in the first full-bridge inverter and the ON/OFF waveform Duty 2 of the certain pair of switches 741 and 744 included in the second full-bridge inverter may be confirmed. A period of a waveform of a grid current Ig may also be confirmed.

For example, it may be seen that during a time between ta and tc, the pair of switches 731 and 734 is maintained in the ON state from Duty 1. In this case, as the current flowing through the pair of switches 731 and 734 increases, an output current I1 may show an increasing pattern. At this time, a period of a waveform of the output current I1 may match the period of Duty 1.

For example, it may be seen that during a time between ta and tb, the pair of switches 741 and 744 is maintained in the OFF state from Duty 2. In this case, as the flow of the current through the pair of switches 741 and 744 is interrupted, an output current I2 may not exist. In another example, it may be seen that during a time between tb and tc, the pair of switches 741 and 744 is maintained in the ON state from Duty 2. In this case, the output current I2 may increase again. At this time, a period of a waveform of the output current I2 may match the period of Duty 2.

In some embodiments, Duty 1 may appear based on the first carrier signal Car1, and Duty 2 may appear based on the second carrier signal Car2. The first carrier signal Car1 and the second carrier signal Car2 may be waveforms of the same period with a certain phase difference. Accordingly, the period of Duty 1 and the period of Duty 2 may be the same with the certain phase difference, and accordingly, the period of the output current I1 and the period of the output current I2 may also be the same with the certain phase difference.

The grid current Ig may have a waveform in which the output current I1 and the output current I2 overlap each other. A constant phase difference may occur between the output current I1 and the output current I2, and thus a ripple current generated in each output may be offset. The grid current Ig, which the output current I1 and output current I2 overlap each other, may have a waveform in which the ripple current is offset.

A period of the waveform of the grid current Ig may correspond to half of the period of Duty 1 and Duty 2. Duty 1 may indicate the operation of each switch included in the first full-bridge inverter. Duty 2 may indicate the operation of each switch included in the second full-bridge inverter. For example, a frequency of the waveform of the grid current Ig may be twice an operating frequency of each switch included in the first full-bridge inverter or the second full-bridge inverter.

Accordingly, a peak-to-peak value Ip of the grid current Ig may be reduced compared to the case of using a single full-bridge inverter. For example, the interleaved bipolar inverter 70 and 80 described above with reference to FIGS. 6 and 7 may each reduce total harmonic distortion (THD) of an AC output, compared to the case of using the single full-bridge inverter.

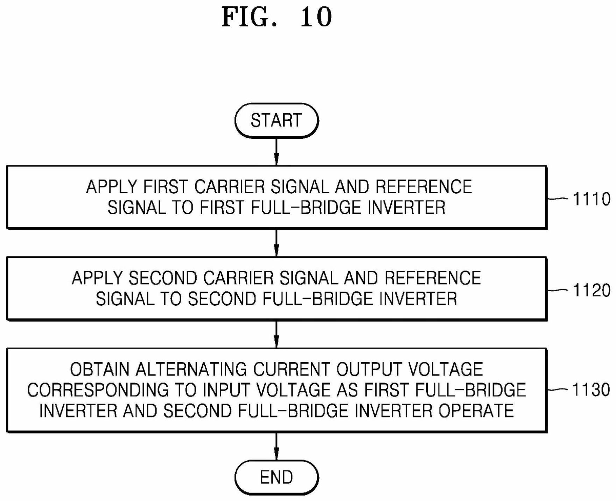

FIG. 10 is a flowchart of a method of operating a power conversion device according to an embodiment.

The method shown in FIG. 10 may include operations performed by the device 500 of FIG. 4. Accordingly, even though omitted below, the foregoing description regarding the device 500 of FIG. 4 and the operations of the components of the device 500 may also be applied to the method shown in FIG. 10.

In operation 1110, the processor 502 may apply a first carrier signal and a control signal to the first full-bridge inverter. In operation 1120, the processor 502 may apply a second carrier signal and the control signal to the second full-bridge inverter. According to an embodiment, the first full-bridge inverter and the second full-bridge inverter may be connected in parallel to the input circuit.

In operation 1130, as the first full-bridge inverter and the second full-bridge inverter operate, the output circuit 720 included in the power conversion module 503 may obtain an AC output voltage corresponding to an input voltage. The first full-bridge inverter may operate according to the first carrier signal and the control signal applied by the processor 502. Likewise, the second full-bridge inverter may operate according to the second carrier signal and the control signal applied by the processor 502.

The first full-bridge inverter may operate based on a difference between the first carrier signal and the control signal, and the second full-bridge inverter may operate based on a difference between the second carrier signal and the control signal.

The first carrier signal and the second carrier signal may have a certain phase difference. The first carrier signal may have the same switching period as the second carrier signal.

The processor 502 may control, based on the first carrier signal and the control signal applied to one of legs, ON/OFF of two switches included in the corresponding leg. Each of the legs may include two switches, and the first full-bridge inverter may include two legs connected in parallel to the input circuit.

An AC output voltage may be generated in the output circuit 720 connected to at least one first inductor and at least one second inductor. The at least one first inductor may be connected to the first full-bridge inverter, and the at least one second inductor may be connected to the second full-bridge inverter.

The processor 502 may control a first switch and a second switch, so that the sum of currents detected by a plurality of current sensors is 0. The plurality of current sensors may be connected to each of the at least one first inductor, the at least one second inductor, and a third inductor, the third inductor may be connected to the first switch and the second switch, and the first switch and the second switch may be connected to the input circuit.

The processor 502 may generate a PWM signal for controlling ON/OFF of the first switch and the second switch.

A computer-readable recording medium according to an embodiment may record thereon a program for causing a computer to execute a method.

According to the disclosure, by adopting a dual bipolar inverter structure operating in an interleaved manner as the structure of a power conversion device, a load handled by each inverter may be reduced, thereby reducing loss and heat generation due to total harmonic distortion (THD).

According to the disclosure, by further using a phase split of a one-leg technique applicable to the above interleaved bipolar inverter, split voltages for a single-phase voltage may be obtained with a simple component configuration.

The embodiment according to the disclosure described above may be implemented as a computer program that may be executed through various components on a computer, and such a computer program may be recorded in a computer-readable medium.

At this time, examples of such media may include magnetic media such as hard disk, floppy disk, and magnetic tape, optical recording media such as CD-ROM and DVD, magneto-optical media such as floptical disk, and hardware devices such as ROM, RAM, flash memory, etc. which are specifically configured to store and execute program instructions.

In some embodiments, the computer program may be designed and configured especially for the disclosure, or may be known to those skilled in the art of computer software for use. Examples of such computer programs may include not only machine language codes created by a compiler, for example, but also high-level language codes executable by a computer using an interpreter or the like.

The specific implementations described in the disclosure are merely illustrative, and do not limit the scope of the disclosure in any way. For the sake of brevity of the specification, descriptions of related art electronic components, control systems, software, and other functional aspects of the systems may be omitted. In addition, connections or connection members of lines between components illustrated in the drawings exemplify functional connections and/or physical or circuit connections, and in actual devices, may be replaceable or may be represented as additional various functional connections, physical connections, or circuit connections. Furthermore, unless otherwise indicated obviously by terms, such as "essential," "important," and the like, a component may not be a necessary component for the application of the disclosure.

In the specification (particularly, in the claims) of the disclosure, the use of the term "the" and similar referential terms may refer to both the singular and the plural. In addition, when a range is described in the disclosure, an invention to which individual values belong to the range are applied is included (unless otherwise described contrarily), and each individual value constituting the range is described in the detailed description of the disclosure.

Unless an order of operations constituting the method according to the present disclosure is explicitly described or a reverse order is not mentioned, those operations may be carried out in any suitable order. The disclosure is not necessarily limited by the order of operations described. The use of any examples or illustrative terms (e.g., etc.) in the present disclosure is merely to describe the disclosure in detail, and unless limited by the claims, the scope of the disclosure is not limited by the examples or illustrative terms. Additionally, it will be understood by those skilled in the art that various modifications, combinations and changes may be made depending on design conditions and factors within the scope of the appended claims or their equivalents.

Therefore, the idea of the disclosure should not be limited to the embodiments described above, and it should be construed that not only the scope of the claims described below but also all ranges equivalent to or equivalently modified from the scope of the claims are included in the scope of the idea of the disclosure.

## Claims

1. A power conversion device comprising:
an input circuit configured to generate an input voltage;
a first full-bridge inverter and a second full-bridge inverter each connected to the input circuit;
at least one first inductor connected to the first full-bridge inverter;
at least one second inductor connected to the second full-bridge inverter;
an output circuit connected to the at least one first inductor and the at least one second inductor to generate an alternating current (AC) output voltage; and
at least one processor configured to apply a first carrier signal and a control signal to the first full-bridge inverter, and apply a second carrier signal and the control signal to the second full-bridge inverter,
wherein the first full-bridge inverter operates based on the first carrier signal and the control signal, and
the second full-bridge inverter operates based on the second carrier signal and the control signal.

2. The power conversion device of claim 1, further comprising:
a first switch and a second switch each connected to the input circuit;
a third inductor connected to the first switch and the second switch; and
a plurality of current sensors connected to each of the at least one first inductor, the at least one second inductor, and the third inductor,
wherein the at least one processor is further configured to control the first switch and the second switch so that a sum of currents detected by the plurality of current sensors is 0.

3. The power conversion device of claim 2, wherein
the at least one processor is further configured to generate a pulse width modulation (PWM) signal for controlling ON/OFF of each of the first switch and the second switch.

4. The power conversion device of claim 1, wherein
the first full-bridge inverter comprises two legs connected in parallel to the input circuit,
each of the legs comprises two switches, and
ON/OFF of the two switches included in one of the legs is controlled based on the first carrier signal applied to the one leg.

5. The power conversion device of claim 1, wherein
the first full-bridge inverter and the second full-bridge inverter are connected in parallel to the input circuit.

6. The power conversion device of claim 1, wherein
the first carrier signal and the second carrier signal have a certain phase difference.

7. The power conversion device of claim 1, wherein
the first carrier signal has a same switching period as the second carrier signal.

8. The power conversion device of claim 1, wherein
the first full-bridge inverter operates based on a difference between the first carrier signal and the control signal.

9. The power conversion device of claim 1, wherein
the second full-bridge inverter operates based on a difference between the second carrier signal and the control signal.

10. A method performed by a power conversion device, the method comprising:
applying a first carrier signal and a control signal to a first full-bridge inverter;
applying a second carrier signal and the control signal to a second full-bridge inverter; and
obtaining an alternating current (AC) output voltage corresponding to an input voltage as the first full-bridge inverter and the second full-bridge inverter operate,
wherein the first full-bridge inverter and the second full-bridge inverter are connected to an input circuit which generates the input voltage, and
an output circuit generating the AC output voltage is connected to at least one first inductor and at least one second inductor.

11. The method of claim 10, further comprising:
controlling a first switch and a second switch so that a sum of currents detected by a plurality of current sensors is 0,
wherein the plurality of current sensors are connected to each of the at least one first inductor, the at least one second inductor and a third inductor,
the third inductor is connected to the first switch and the second switch, and
the first switch and the second switch are connected to the input circuit.

12. The method of claim 10, further comprising:
controlling, based on the first carrier signal and the control signal applied to one of legs, ON/OFF of two switches comprised in the one leg,
wherein each of the legs comprises the two switches, and
the first full-bridge inverter comprises the legs, which are two, connected in parallel to the input circuit.

13. The method of claim 10, wherein
the first carrier signal and the second carrier signal have a certain phase difference.

14. The method of claim 10, wherein
the first carrier signal has a same switching period as the second carrier signal.

15. A computer-readable recording medium recorded thereon a program for causing a computer to execute the method of claim 10.
